# EUROPEAN PATENT APPLICATION

(11) **EP 4 685 333 A1**
(43) Date of publication of application: **28.01.2026**
(21) Application number: 25172676.6
(22) Date of filing: 25.04.2025
(51) Int. Cl.: E21B 47/14, E21B 49/08

(54) **MODULAR DOWNHOLE TESTING TOOL**

(30) Priority: 26.07.2024 US 202463676162 P; 21.04.2025 US 202519184079
(71) Applicant: Services Pétroliers Schlumberger, 75007 Paris (FR); Schlumberger Technology B.V., 2514 JG The Hague (NL)
(72) Inventor: CHIN, Gareth Yen Ket, Rosharon 77583 (US); SMARANDACHE, Marius, Rosharon 77583 (US); MERLAU, David, Rosharon 77583 (US); ZIMDARS, Bryan, Houston 77042 (US); ALVAREZ, Luis, Rosharon 77583 (US)
(74) Representative: Schlumberger Intellectual Property Department

(57) **Abstract**

A downhole evaluation device includes a first actuatable downhole module, a second actuatable downhole module, and a universal control circuit. The universal control circuit has a first circuit path and a second circuit path, wherein the first circuit path connects to the first actuatable downhole module and the second circuit path connects to the second actuatable downhole module irrespective of a relative positioning of the first actuatable downhole module and the second actuatable downhole module. A universal control module is connected to the universal control circuit for selectively controlling an actuation of the first actuatable downhole module and the second actuatable downhole module.

## Description

### CROSS-REFERENCE TO RELATED APPLICATIONS

This application is a claims priority to and the benefit of United States Provisional Patent Application No. 63/676,162, filed on July 26, 2024, titled "Techniques for Providing a Modular Valve and the Usage and Manufacture of the Same", which is hereby incorporated by reference in their entireties.

### BACKGROUND OF THE DISCLOSURE

Wellbores may be drilled into a surface location or seabed for a variety of exploratory or extraction purposes. For example, a wellbore may be drilled to access fluids, such as liquid and gaseous hydrocarbons, stored in subterranean formations and to extract the fluids from the formations. Wellbores used to produce or extract fluids may be formed in earthen formations using earth-boring tools such as drill bits for drilling wellbores and reamers for enlarging the diameters of wellbores. Various tools me be implemented within a formed wellbore for testing purposes. For example, in some cases formation testing tools are conveyed downhole to evaluate one or more aspects of a formation.

### SUMMARY

In some embodiments a downhole evaluation system includes a first actuatable downhole module, a second actuatable downhole module, and a universal control circuit. In some embodiments, the universal control circuit includes a first circuit path and a second circuit path, wherein the first circuit path connects to the first actuatable downhole module and the second circuit path connects to the second actuatable downhole module irrespective of a relative positioning of the first actuatable downhole module and the second actuatable downhole module. In some embodiments, a universal control module is connected to the universal control circuit for selectively controlling an actuation of the first actuatable downhole module and the second actuatable downhole module.

In some embodiments, a formation testing system, includes a tubular positioned within a wellbore, a packer connected to the tubular to fix a position of the tubular within the wellbore, a downhole evaluation system connected to the tubular. In some embodiments, the downhole evaluation system includes a plurality of actuatable downhole modules, a universal control circuit connected to each of the plurality of actuatable downhole modules independently and irrespective of a relative positioning therebetween, and a universal control module connected the plurality of actuatable downhole modules via the universal control circuit for selectively controlling an actuation of each of the plurality of actuatable downhole modules.

In some embodiments, a method of operating a downhole evaluation system includes receiving a control signal with a universal control module, and, based on the control signal, communicating a first actuation signal via a universal control circuit connecting the universal control module to a first actuatable downhole module and to a second actuatable downhole module. In some embodiments, communicating the first actuation signal includes, when the first actuatable downhole module is positioned uphole of the second actuatable downhole module, communicating the first actuation signal along a first circuit path to the first actuatable downhole module, and when the second actuatable downhole module is positioned uphole of the first actuatable downhole module, communicating the first actuation signal along the first circuit path to the first actuatable downhole module. The method further includes actuating the first actuatable downhole module based on the first actuation signal.

This summary is provided to introduce a selection of concepts that are further described in the detailed description. This summary is not intended to identify key or essential features of the claimed subject matter, nor is it intended to be used as an aid in limiting the scope of the claimed subject matter. Additional features and aspects of embodiments of the disclosure will be set forth herein, and in part will be obvious from the description, or may be learned by the practice of such embodiments.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example embodiments, the embodiments will be described and explained with additional specificity and detail through the use of the accompanying drawings in which:
FIG. 1 is an example of a wellbore system, according to at least one embodiment of the present disclosure;
FIG. 2 illustrates an example of a downhole evaluation system positioned within a wellbore, according to at least one embodiment of the present disclosure;
FIG. 3 illustrates a schematic representation of a downhole evaluation system, according to at least one embodiment of the present disclosure;
FIG. 4-1 illustrates a cross-sectional view of a tubular for implementing one or more features or functionalities of a universal control circuit, according to at least one embodiment of the present disclosure
FIG. 4-2 illustrates a downhole evaluation system having an exemplary architecture of a universal control circuit, according to at least one embodiment of the present disclosure;
FIG. 4-3 illustrates a downhole evaluation system having another exemplary architecture of a universal control circuit, according to at least one embodiment of the present disclosure;
FIG. 5-1 illustrates an exemplary configuration of a downhole evaluation system, according to at least one embodiment of the present disclosure;
FIG. 5-2 illustrates an exemplary configuration of a downhole evaluation system, according to at least one embodiment of the present disclosure;
FIG. 6 illustrates an exemplary configuration of a downhole evaluation system, according to at least one embodiment of the present disclosure; and
FIG. 7 illustrates a flow diagram for a method or a series of acts for operating a downhole evaluation system as described herein, according to at least one embodiment of the present disclosure.

### DETAILED DESCRIPTION

This disclosure generally relates to modular downhole evaluation systems. For example, downhole evaluation systems as described herein may be implemented via one or multiple actuatable downhole modules which may each be connectable to a universal control module via a universal control circuit. The universal control circuit is implemented via (e.g., through) the modules themselves, and in this way, the universal control circuit is configured such that each actuatable downhole module connects to the universal control module regardless of which specific combination of modules the downhole evaluation system is configured with, and additionally, irrespective of an order or relative positioning of the modules. For instance, the present techniques describe modular systems that may be readily reconfigured, reordered, recombined, sized, spaced, and/or otherwise implemented with any combination of potential actuatable downhole modules and in any arrangement or order. In particular, such reconfigurable systems may be readily assembled and implemented for performing specific downhole operations (e.g., actuations) based simply on connecting the modular components, reducing or preventing the need for designing, engineering, and producing a particular, custom, or bespoke system for a specific application and/or having a specific combination of actuatable components. For instance, the universal control circuit as described herein may facilitate implementing one or multiple circuit paths which may each connect to a corresponding actuatable downhole module regardless of a type and/or relative positioning of the corresponding module. This may facilitate exchanging different modules and/or changing an order thereof in the downhole evaluation system in order that any of a number of particular downhole evaluation systems may be readily configured and implemented for achieving a particular testing objective. In this way, the present techniques provide benefits over conventional systems, which may not be configurable for exchanging or reordering components, for example, without completely redesigning an application-specific evaluation tool.

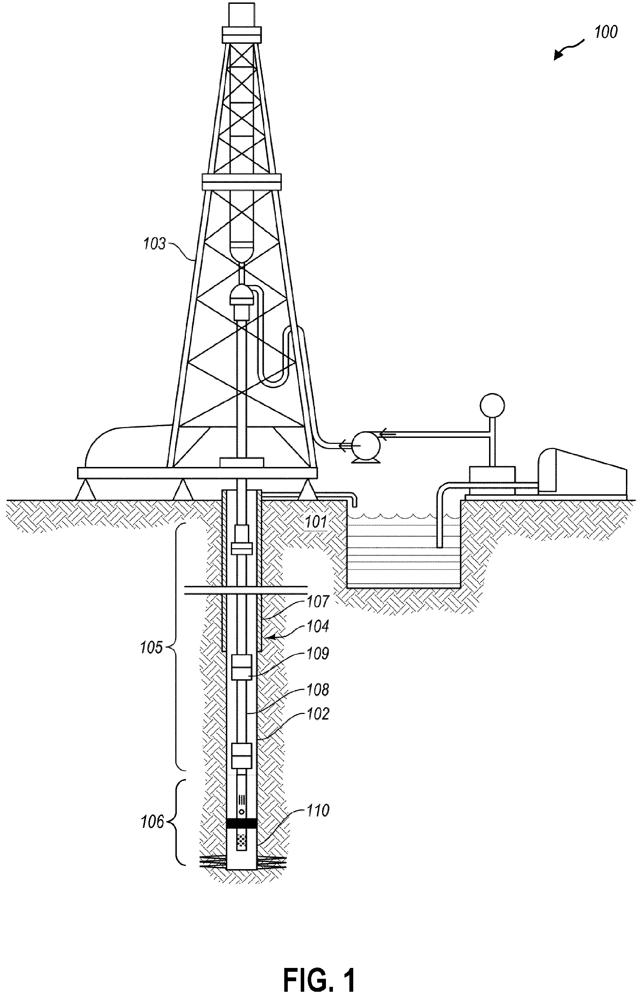

Additional details will now be provided regarding systems described herein in relation to illustrative figures portraying example implementations. For example, FIG. 1 shows one example of a wellbore system 100 including a wellbore 102 within an earth formation 101. The wellbore may be formed through a drilling process, or other wellbore forming process. The wellbore system 100 includes a rig 103 used to suspend, convey, turn, or otherwise support a tool assembly 104 which extends downward into the wellbore 102. The tool assembly 104 may include a tool string 105 and a production assembly 106 attached to the downhole end of the drill string 105.

The tool string 105 may include several joints of pipe 108 connected end-to-end through tool joints 109. For example, the pipe 108 may be a production tubing or other pipe for circulating fluid therethrough. For instance, the tool string 105 may transmits drilling fluid, brine, mud, or other fluid through a central bore. In some cases, the tool string 105 may transmit rotational power from the rig 103 to the production assembly 106.

In some cases, the production assembly 106 includes a packer for fixing a position of the production assembly 106 and/or for sealing or isolating one or more zones of the formation 101. Additionally, the production assembly 106 may include a fluid intake for receiving a flow of formation fluid, as well as one or more valves for controlling the flow of fluid through the production assembly 106. The pipe 108 provides a hydraulic passage through which fluid is pumped from the surface and/or from downhole. For instance, in some cases, formation fluid or production fluid may be pumped via the production assembly 106 to the surface. The production assembly 106 and/or the tool string 105 may include additional downhole tools and/or components such as subs, pup joints, etc.

In some cases, the production assembly 106 may be implemented in the wellbore 102 for measurement, testing, and/or evaluation purposes. For example, the production assembly 106 may include measurement equipment for evaluating the wellbore 102, a surrounding formation, a reservoir, or other downhole features. In a particular example, formation testing operations may be performed.

Formation testing operations may typically involve measuring pressure, permeability, and/or fluid properties of a subsurface formation to evaluate its potential for hydrocarbon production. These tests can be performed using specialized downhole tools which temporarily isolate the formation to allow fluid flow for pressure buildup and drawdown analysis. For instance, by selectively flowing fluid through circulation valves and/or sealing portions of the wellbore with isolation valves (e.g., tester valves), reservoir pressure, fluid mobility, formation productivity, and other properties can be determined. Formation evaluation systems may include instrumentation at one or more locations to measure relevant properties (e.g., pressure, temperature, flowrate, etc.) associated with or attributed to a production zone, reservoir, or other area of interest.

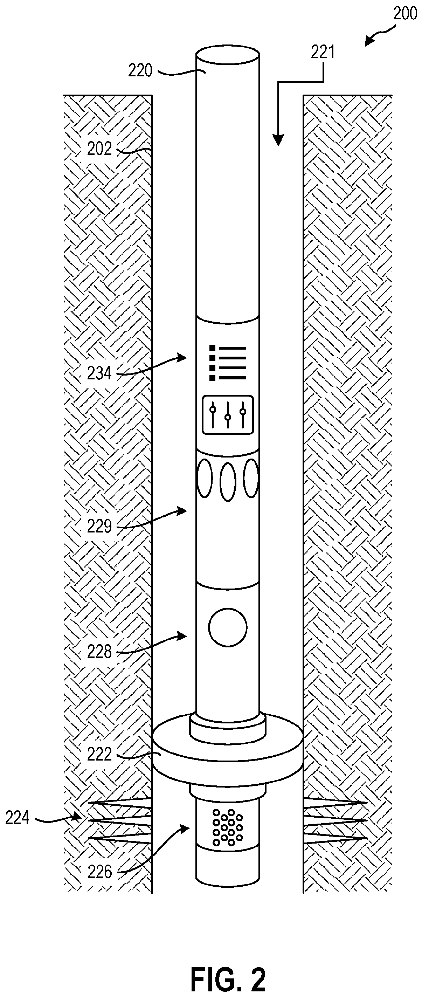

FIG. 2 illustrates an example of a downhole evaluation system 200 positioned within a wellbore 202, according to at least one embodiment of the present disclosure. The downhole evaluation system 200 may be a formation evaluation system or formation testing system for performing one or more formation testing operations, or may be any other testing, measurement, or evaluation system. The downhole evaluation system 200 may be connected to a production tubing 220. For example, the production tubing 220 may be representative of any downhole tubular, drill pipe, or tubing typically utilized for downhole operations. For instance, the downhole evaluation system 200 may be conveyed and/or positioned within the wellbore 202 by equipment as described in connection with FIG. 1, such as a rig.

The production tubing 220 may extend from a surface of the wellbore 202, and may provide a conduit for fluid to flow therein. For example, in some cases, fluid such as drilling fluids or muds, brines, or other fluid may be made to flow through the production tubing 220 from the surface. In other examples, formation fluids or production fluids may be permitted to flow (e.g., upward) through the production tubing 220. In addition to providing a fluid conduit in this way, the production tubing 220 may support, position, and/or connect the various components of the downhole evaluation system 200 within the wellbore 202.

The downhole evaluation system 200 may include a packer 222. The packer 222 may be a sealing device which may be inflated or expanded against the wellbore 202 (e.g., an open wellbore or a cased wellbore) and in this way may be set or fixed, either temporarily or permanently, within the wellbore 202. The packer 222 may be connected to the production tubing 220 such that the production tubing 220 (e.g., and associated components connected thereto) may be fixed or positioned in place locally around the packer 222. For example, the packer 222, when set, may help to fix a depth, axial and/or lateral position of the various components of the downhole evaluation system 200.

The packer 222 may seal against the wellbore 202 which may isolate and/or seal one or more portions of the wellbore 202. For example, the packer may prevent fluid communication across the packer 222 which may facilitate isolating different zones of a formation. In one example, the packer 222 may be set above a production zone 224, which may be a zone, area, reservoir, or formation where underground resources (e.g., hydrocarbons) are found.

The downhole evaluation system 200 may include a fluid inlet 226, for example, at an end of the production tubing 220. The fluid inlet 226 may provide a point of entry for formation fluids into the production tubing 220. For instance, the fluid inlet 226 may be positioned below the packer 222 such that fluids from the production zone 224 may flow into the production tubing 220. In some cases, the fluid inlet 226 includes one or more filters or screens for preventing solid particles from entering the production tubing 220 to reduce the risk of blockages or malfunctions.

The packer 222 being sealed against the wellbore 202 and the fluid inlet 226 being positioned thereunder may facilitate taking pressure and/or flow measurements of the production zone 224 (e.g., reservoir) within the production tubing 220. For example, the production zone 224 may have a natural reservoir pressure, and formation fluids may tend to flow into the production tubing 220 as sealed against the wellbore 202 by the packer 222. Sensors or other measurement devices or instrumentation within the production tubing 220 may take measurements of the flow (e.g., pressure, temperature, flowrate, etc.) which may facilitate characterizing the production zone 224.

As shown, the downhole evaluation system 200 includes an isolation valve 228, sometimes referred to as a tester valve. The isolation valve 228 may facilitate stopping, restricting, cutting, or isolating the flow of the formation fluid through the production tubing 220. For example, the isolation valve 228 may be closed in order to isolate, seal, or shut in the production zone 224 (e.g., from the rest of the production tubing 220, from other formations or production zones, etc.) in order to evaluate one or more properties of the production zone 224. For instance, isolating the production zone 224 in this way may cause a pressure buildup in the production tubing 220 (e.g., below the isolation valve 228) attributable to the production zone 224. Accordingly, pressure sensors or other measurement devices may measure the pressure in order to characterize the production zone 224. Similarly, other instrumentation may take other relevant measurements.

In some cases, the downhole evaluation system 200 includes a circulation valve 229. The circulation valve 229 may be a valve which facilitates fluid communication between the production tubing 220 and an anulus 221 of the wellbore 202 (e.g., between the production tubing 220 and the wellbore wall). Fluid such as drilling mud, brine, etc. may be circulated from the surface, through the production tubing 220, and out of the circulation valve 229 into the anulus 221 before or after testing operations, for example, to help equalize pressures, remove unwanted debris, and other functions. In some cases, the circulation valve 229 may allow wellbore fluid (e.g., in the anulus 221) to flow into the production tubing 220.

In typical formation evaluation systems, the isolation valve and the circulation valve may typically be implemented above (e.g., uphole of) the packer. This positioning may facilitate communicating and/or controlling these components, as downhole communication is typically performed through telemetry techniques such as mud pulse telemetry (MPT). For example, by modulating, alternating, or pulsing the flow of fluid through the anulus, receiving components may detect the pressure and/or flowrate pulses to receive encoded control signals. For example, conventional downhole evaluation systems may include control componentry implemented in the production tubing and operably coupled to the isolation valve and/or the circulation valve to control the operation thereof. Accordingly, the isolation valve, circulation valve, and associated control componentry may typically be implemented above the packer such that control signals may be received through the wellbore fluid (e.g., through MPT). For example, because the packer is sealed against the wellbore, were these components positioned below the packer, mud pulses could not be communicated thereto through the packer.

The downhole evaluation system 200 may include a universal control module 234 which may be a modular component as described herein and may facilitate a modular configuration, connection, arrangement, and/or relative positioning of the various valves or other actuatable components of the downhole evaluation system 200. This configurable and/or modular nature may facilitate, in some cases, implementing the universal control module 234 below the packer 222, and the universal control module 234 may nevertheless be operable to receive control signals through means other than MPT, such as through acoustic signals. In this way, the downhole evaluation system 200 may be configured and implemented for performing various different formation testing operations. For instance, in some embodiments, the downhole evaluation system 200 is implemented with different, more, or less components than shown, for performing other downhole evaluation operations.

The universal control module 234 may also facilitate reducing the overall quantity of communication (e.g., surface control signals, MPT, etc.) to be communicated downhole. For example, because the universal control module 234 may be connected to and/or may control multiple (e.g., several) different downhole modules, a single communication stream from the surface may effectively be implemented to control these multiple modules. For instance, in some conventional cases, each downhole module may be configured with its own control equipment for receiving surface communications, and accordingly, several different surface communications must be sent in order to control multiple different downhole modules. Accordingly, the universal control module may facilitate simplifying downhole evaluation systems by providing a single point of contract for communicating with and controlling various downhole modules. Indeed, this may also simplify the components and/or hardware of the downhole evaluation system itself by eliminating the need for multiple sets of receivers, batteries, commuting systems, etc. to operate multiple different downhole modules.

As mentioned, the circulation valve 229 and the isolation valve 228 may be controlled and/or actuated by a control system and/or control componentry. In conventional solutions, each of these components may be controlled by distinct, individual control equipment, or else, a single control system may operate both valves. In either case, typical downhole evaluation systems are generally configured having a given collection of downhole actuatable components (and relative positioning thereof) and associated control equipment as a bespoke, custom, and/or specifically designed implementation. For example, as shown in FIG. 2, the isolation valve 228 is positioned downhole from the circulation valve 229 (e.g., in accordance with a particular evaluation operation to be performed). In other situations, other actuatable components and/or relative ordering thereof may be implemented for downhole evaluation purposes. In any case, however, the configuration and positioning of these components generally must be specifically designed, engineered, and produced, and swapping these components (e.g., valves) and/or rearranging these components is not trivial, and in some cases not possible. For example, in some cases, the various actuatable components (e.g., valves) of a downhole evaluation system are specifically packaged, connected and/or positioned within a common housing, body or module, such as a singular unit or consolidated tool for implementing downhole. Accordingly, such a system may not be readily reconfigurable.

As an illustrative example, a downhole evaluation system like that shown in FIG. 2 is conventionally implemented as a specifically designed system having the configuration of valves (or other actuatable components) and relative positioning thereof. For instance, the associated circuitry, circuit paths, flow paths, actuators, hydraulics, pilot valves, cylinders, pressure chambers, solenoids, etc., for operating the system must be particularly designed, packaged, routed, etc., within associated housing(s) to facilitate a particularly envisioned operation of a given downhole evaluation system. Accordingly, the specific valves (or other actuatable components), and in particular their relative positioning, cannot be readily swapped, exchanged, rearranged, and/or reconfigured, for example, without a complete redesign and/or reinvention of the system as a whole. This may be especially true where a single control system operates multiple actuatable components, as such generally has to be specifically designed having complex mechanical components, connections, etc., in order that the various components can be actuated as intended, which cannot be readily modified to function with different actuatable components.

In short, downhole evaluation systems typically lack modularity such that the connection, implementation, and operation of any combination of components, and any relative positioning thereof, may not be readily attainable, for example, without specifically designing and engineering an application-specific system of components. Indeed, conventional downhole evaluation systems may not, for example, be capable of being configured and assembled at a surface of the wellbore and/or by wellbore personnel with any collection of actuatable components and in any arrangement for readily implementing and operating in a wellbore, but rather, each combination and configuration of actuatable components must be specifically designed, engineered, and manufactured for such use.

In contrast, the downhole evaluation system 200 (and other downhole evaluation system as described herein) are modular in nature, and are implemented by arranging and connecting various modules (e.g., in any order) in order to achieve a given configuration of downhole actuatable components. For example, the universal control module 234 may facilitate connecting any collection of downhole actuatable components, and in any arrangement, such that the downhole evaluation system 200 may be readily implemented with any configuration for performing any associated downhole operation.

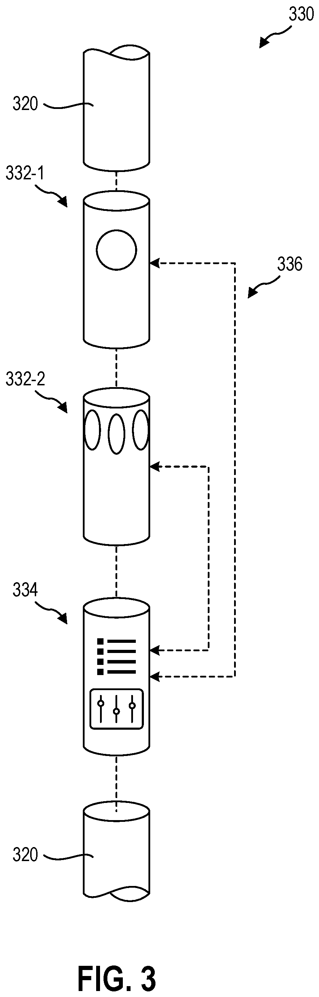

FIG. 3 illustrates a schematic representation of a downhole evaluation system 330, according to at least one embodiment of the present disclosure. In some cases, the downhole evaluation system 330 may be a formation testing system as described herein for performing formation testing operations. For example, the downhole evaluation system 330 may be implemented within a wellbore as described herein. The downhole evaluation system 300 may facilitate taking one or more measurements of a production zone or reservoir for understanding and/or characterizing the production zone. For example, the downhole evaluation system 300 may include one or more sensors, measurement devices, or other instrumentation. The sensors may be located at any relevant location for taking measurements associated with characterizing a formation, production zone, or reservoir. In other cases, the downhole evaluation system 330 may be otherwise configured as another type of measurement and/or evaluation system and for performing other downhole operations.

The downhole evaluation system 330 may be connected to, and implemented in connection with, a production tubing 320. For example, the downhole evaluation system 330 may be conveyed and positioned within a wellbore via the production tubing 320, and together with the production tubing 320 may facilitate performing one or more downhole evaluation operations, such as formation testing operations for testing pressure, flowrate, etc., of an underground reservoir.

The downhole evaluation system 330 may be a modular system such that any of a variety of components, including any configuration, arrangement, or relative positioning of the components, may be combined, assembled, and implemented in a modular way, in order to perform many different operations within a wellbore. For example, the downhole evaluation system 330 may include a first downhole actuatable module 332-1 (e.g., first module) and a second downhole actuatable module 332-2 (e.g., second module). Additionally, the downhole evaluation system 330 may include a universal control module 334 for controlling and/or actuating the first module 332-1 and second module 332-2 via a universal control circuit 336. In some cases, the universal control module 334 is positioned below (e.g., downhole of) the first module 332-1 and second module 332-2 as shown. In some cases, the universal control module 334 is otherwise positioned, such as above the first module 332-1 and second module 332-2, or between the first module 332-1 and second module 332-1 (or other modules).

The first module 332-1 and the second module 332-2 may each be representative of a distinct actuatable downhole component which may be included in the downhole evaluation system 330 and actuated in order to perform a specific function. For example, in some cases, the first module 332-1 and second module 332-2 are each downhole flow control devices (e.g., downhole valves) which may be actuated and which may control, meter, or otherwise direct the flow of a fluid therethrough (e.g., wellbore fluid, formation fluid, production fluid, drilling fluid, or other downhole fluid found in a downhole environment). For example, in some cases the first module 332-1 is an isolation valve module and the second module 332-2 is a circulation valve module.

The downhole evaluation system 330 may be equipped with any number of actuatable downhole modules. For example, while shown in FIG. 3 with two modules, in some cases the downhole evaluation system 330 includes (e.g., in addition to the universal control module 334) 1, 2, 3, 4, 5, 6, 7, or 8 distinct actuatable modules. In some cases, up to 6 modules may be included and actuatable by the downhole evaluation system 330. Thus, the first module 332-1 and the second module 332-2 (collectively modules 332) may be representative of a collection of modules 332 in any quantity as described herein. Additionally, while the first module 332-1 and the second module 332-2 are illustrated in FIG. 3 as distinct and/or separate modules 332, for example, implemented via separate housings or tool bodies, in some cases, the various modules 332 may be implemented as components housed, installed, or positioned in a same housing or tool body. In some cases, the various modules 332 may be implemented across multiple housings or tool bodies.

The modules 332 may be any type of actuatable downhole component which may be included in the downhole evaluation system 330 for performing one or more specific functions based on an actuation thereof. For instance, any of the modules 332 may be a circulation valve, an isolation valve, a tester valve, spool valve, a reversing valve, a check valve, a flapper valve, a ball valve, a gate valve, a cutter valve, or a sampling valve. In some cases, each of the modules 332 is a different actuatable component, or two or more of the modules 332 may be the same type of actuatable component. For instance, in some cases, it may be advantageous to equipe a downhole evaluation system with multiple of one type of component, such as multiple circulation valves or multiple isolation valves.

Accordingly, the downhole evaluation system 330 may be implemented with any number of modules 332 for performing a variety of downhole functions. Additionally, the functionality and usefulness of the individual modules 332 may be further expanded based on the modules 332 being configurable, connectable, and/or operable in any arrangement and/or relative positioning. For example, as shown in FIG. 3, the first module 332-1 (e.g., an isolation valve module) is positioned above or uphole of the second module 332-2 (e.g., a circulation valve module). The downhole evaluation system 330, however, may be readily implemented or connected with the positioning of these valves reversed, that is, the second module 332-2 positioned uphole of the first module 332-1. In some cases, the modules 332 are directly connected to one another. In some cases, one or more modules 332 may be separated and/or positioned at a specific relative distance, such as by a spacer, pup joint, or other separating component. For instance, the universal control circuit 336 may be implemented via these connective and/or separating components to enable connectivity to the modules 332 at any desired axial position.

Indeed, regardless of a relative positioning of the various modules 332, each module 332 may be operable and actuatable to perform its downhole function by virtue of the universal control circuit 336, which may connect the universal control module 334 to each of the modules 332 irrespective of the relative positioning thereof. Indeed, based on the universal control circuit 336, the modules 332 may be readily swapable and/or rearranged, and such reconfiguring of the downhole evaluation system 330 may connect or couple the modules 332 to the universal control module 334 based on the universal nature of the universal control circuit 336 as described in more detail below. In some cases, the universal control module 334 may be positioned at an uphole end, a downhole end, or at an intermediate location of the collection of modules 332.

The modularity of the downhole evaluation system 330 in this regard may be beneficial in that any number of modules 332 may be readily combined and in any arrangement without requiring a substantial redesign and/or re-engineering of a bespoke, custom, and/or application-specific system. For example, in a situation where it may be desirable to implement a downhole evaluation system having two circulating valves and an isolation valve, and each being positioned at given axial locations, corresponding modules may be simply connected together in this given configuration and the resulting system may be readily deployed in order to accommodate the desired application. In contrast, conventional techniques may require that such an application-specific tool be specifically designed and produced, which in many cases may not be possible due to time, difficulty, and expense. Indeed, based on the modular techniques described herein, practically any system having any combination, positioning, and arrangement of modules may be readily conceived and implemented for accommodating any downhole condition, operation, or circumstance. In contrast, conventional techniques may be limited to only a few downhole evaluation systems/tools having been designed and produced such that wellbore operations must make do with the limited systems available rather than having the flexibility of the modular design described herein.

The modularity of the downhole evaluation system 330 may be achieved based on the universal control module 334 (via the universal control circuit 336) being capable of connecting to and controlling any combination and/or arrangement of modules 332. The universal control module 334 may be representative of control equipment and/or componentry which may be connected or operably coupled to the modules in order to control and/or actuate the modules. For example, the first module 332-1 and the second module 332 may each be connected to the universal control module 334 by the universal control circuit 336, which may facilitate selectively actuating the modules 332 based on actuation signals sent from the universal control module 334. For instance, the universal control module 334 may generate actuation signals and may transmit the actuation signals to corresponding modules 332 in order that those modules 332 are driven to (or otherwise instructed to) perform an actuation function. As described in detail below, the universal control circuit may be implemented via one or more circuit paths which each connect to a corresponding module 332. These circuit paths may be implemented in or through the modules 332 themselves such that the circuit paths may flow or pass through any of the modules 332 as needed to connect to a corresponding module 332. In this way, regardless of the ordering of the modules 332, and also regardless of which modules are included, the associated circuit paths may make their corresponding connections.

In some cases, the universal control circuit 336 is a hydraulic circuit, and the actuation signals are hydraulic pressures or flows communicated or otherwise transmitted to corresponding modules 332, which in turn causes the modules 332 to actuate. Accordingly, the universal control module 334 may include componentry and equipment for generating hydraulic flows and for selectively directing the hydraulic flows to a given module or modules 332. For instance, in some cases the universal control circuit 336 includes a pressure-controlled valve actuator control system for generating and transmitting hydraulic and/or pressure signals. To elaborate, the universal control module 334 may include one or more pilot valves, shuttles, cylinders, pressure chambers, hydraulic circuits, actuators, solenoids, or other equipment for generating and/or directing a pressurized flow of a control fluid to specific ports or flow paths corresponding with one or more specific modules. In some cases, the control fluid utilized in such a hydraulic circuit is the fluid (e.g., drilling fluid) present and/or circulating through the production tubing 320. For example, the universal control module 334 may leverage the flow and/or pressure of the fluid in the production tubing (e.g., as provided from the surface of the wellbore) to selectively direct pressurized and/or hydraulic flows of control fluid to the various modules 332 to achieve actuation of the modules 332. In some cases, the control fluid utilized to provide the actuation controls is another fluid (e.g., not the wellbore fluid), such as a hydraulic fluid housed and provided by the universal control module 334.

In some cases, one or more features of the universal control module 334 may be achieved based on the techniques described in U.S. Patent No. 4,796,699, which is hereby incorporated by reference in its entirety. For instance, the universal control module 334 may include equipment and componentry as is known or typical for pressure-controlled downhole devices, but may do so to selectively generate and transmit hydraulic signals to specific modules 332 via the universal control circuit 336 as described in detail below.

In some cases, the universal control circuit 336 is an electrical circuit, and the universal control module 334 may communicate actuation signals to the modules 332 in an electrical domain. For example, the universal control circuit 336 may couple the universal control module 334 to the various modules 332 through one or more wires, conductors, traces, or other circuit elements such that electrical power and/or signals may be communicated therebetween. To elaborate, the modules 332 may be equipped with electronic actuators, and the actuators may be actuated (e.g., powered) or otherwise instructed to actuate based on electrical actuation signals transmitted from the universal control module 334 via the universal control circuit 336.

In some embodiments, the universal control module 334 operates based on receiving control signals, for example, transmitted from one or more uphole devices, or from the surface. For example, the universal control module 334 may include receiving components for detecting or receiving the control signals. In some cases, the receiving components are sensors or other measurement devices for detecting pressure pulses in a wellbore fluid within an anulus of a wellbore, such as through MPT as described above

In a particular example, the universal control module 334 is equipped with acoustic receivers (e.g., sonic receivers) for detecting or receiving acoustic control signals. For example, acoustic signals may be generated by a surface device which may travel through the formation, through a wellbore fluid, through the production tubing, or otherwise, and which may be received at the universal control module 334. Accordingly, the universal control module 334 may be instructed how to operate (e.g., which modules 332 to actuate and/or de-actuate) based on receiving control signals.

In some cases, transmitting and receiving control signals as acoustic signals may be advantageous over conventional signal transmission techniques, such as MPT. For example, as described above, when relying on MPT to communicate with a downhole control system, the control system must be positioned above a packer or other device which seals or prevents the circulation of fluid in the anulus. By communicating via acoustic signals, however, the universal control module 334 may be advantageously positioned below a packer or other flow-restricting component. For example, because the universal control module 334 does not (in some cases) rely on detecting modulations in the flow of the wellbore fluid (e.g., mud pulses), but rather via acoustic signals transmitted through any of a variety of media, the acoustic signals may be received at the universal control module 334 notwithstanding the universal control module 334 being positioned below a set packer of the downhole evaluation system 330. Indeed, because acoustic signals may travel through a variety of different media (e.g., including a wellbore fluid in the anulus), the acoustic signals may travel (e.g., through the formation, through a tool body, etc.) to and be received by the acoustic receiving components of the universal control module 334 despite a packer sealing a portion of the wellbore from fluid circulation.

In this way, the downhole evaluation system 330 may comprise a variety of actuatable modules 332 which may each actuate for performing particular functions as part of a downhole evaluation operation. Additionally, the downhole evaluation system 330 may be implemented via a single, universal control module 334, which may advantageously control and/or actuate each of the modules 332. The downhole evaluation system 330 may readily and advantageously be implemented with any combination and arrangement of modules 332.

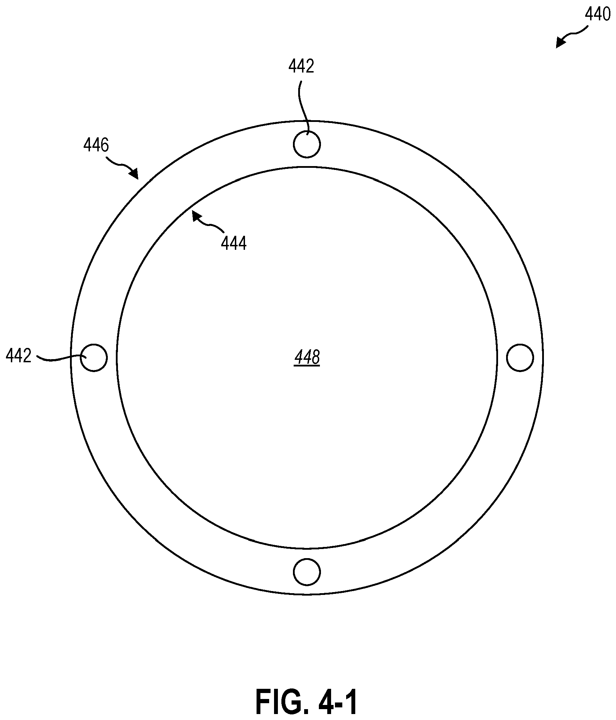

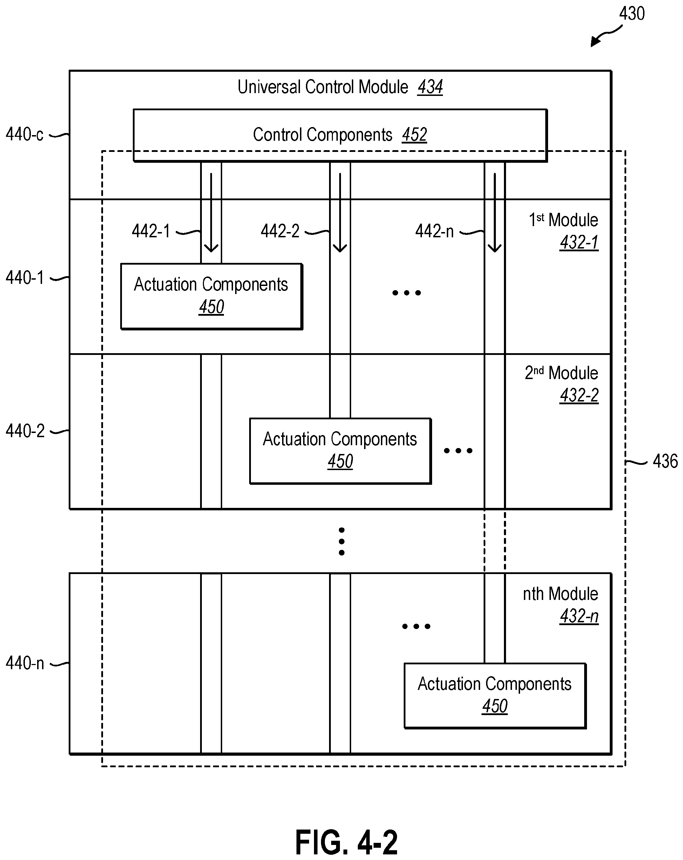

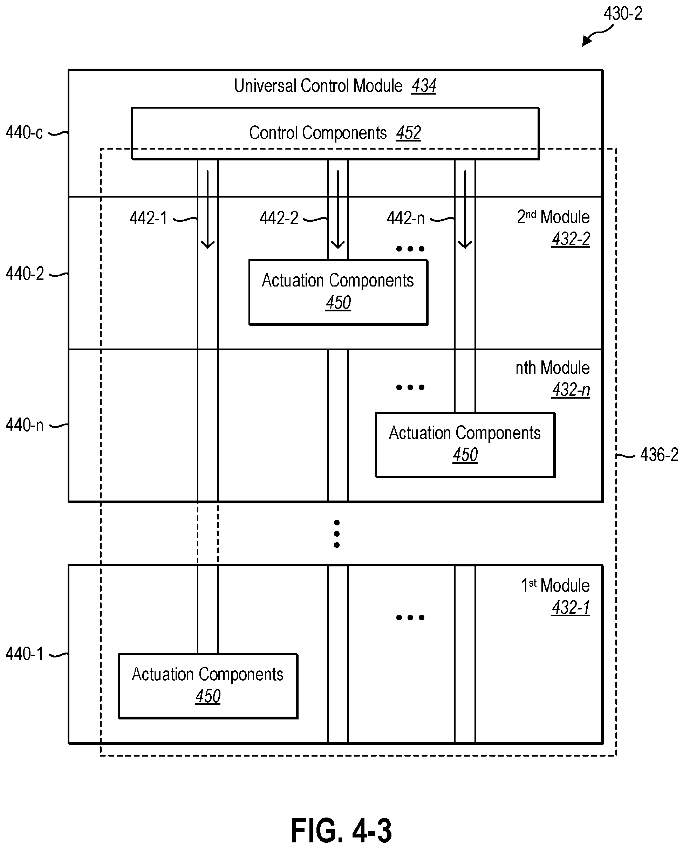

FIGS. 4-1 through 4-3 illustrate an exemplary architecture for a universal control circuit 436 for controlling a variety of actuatable downhole modules, according to at least one embodiment of the present disclosure. For instance, FIG. 4-1 illustrates a cross-sectional view of a tubular 440 for implementing one or more features or functionalities of the universal control circuit 436. The tubular 440 may be representative of a tubular body or structure through which one or more of a universal control module, or actuatable downhole module may be implemented, as described herein. FIG. 4-2 illustrates an exemplary architecture for the universal control circuit 436 by way of the tubular 440 of FIG. 4-1 opened and flattened in a flat plane for illustrative purposes. FIG. 4-3 illustrates the universal control circuit 436 as rearranged or reordered in an alternate architecture, representative of a universal control circuit 436-2. Accordingly, FIG. 4-2 illustrates a downhole evaluation system 430 and FIG. 4-3 illustrates the downhole evaluation system 430 as rearranged or reordered, representative of a downhole evaluation system 430-2. In some cases, the downhole evaluation system 430 may be a formation testing system for performing formation testing operations.

As shown in FIG. 4-1. The tubular 440 may be implemented with one or more circuit paths 442 disposed therein. In some cases, the circuit paths 442 may be passages, gun drills, openings, conduits, or other flow paths for facilitating a flow of a fluid (e.g., a control fluid) therethrough. For example, the circuit paths 442 may be hydraulic circuit paths for flowing hydraulic actuation signals therethrough as described herein. In some cases, the circuit paths 442 may be electrical contacts, conductors, wires, traces, or other electrically transmitting features. For instance, the circuit paths 442 may be electrical circuit paths for transmitting electrical (e.g., power and/or control) signals therethrough, as described herein. In some cases, the tubular 440 is configured with solely hydraulic circuit paths, solely electrical circuit paths, or a combination of both. In this way, actuation signals may be transmitted via the tubular 440 (e.g., or several, similar iterations thereon), such as is described in more detail in connection with FIGS. 4-2 and 4-3.

In some cases, the circuit paths 442 may be implemented within a wall or thickness of the tubular 440, as shown. For example, the thickness may be a material thickness between an inner diameter 444 and an outer diameter 446 of the tubular 440. The inner diameter 444 may define an inner bore 448, which may be a fluid passage for flowing production fluid, drilling fluid etc. For instance, the circuit paths 442 may be formed, inserted into, or otherwise positioned within the material of the tubular 440 such that the circuit paths 442 are not exposed at the inner diameter 444 or the outer diameter 446 of the tubular 440. In some cases, one or more circuit paths 442 are positioned at least partially within the inner bore 448. For instance, one or more circuit paths 442 (or a portion thereof) may be formed partially within the thickness of the tubular 440 and may extend into the inner bore 448. In other cases, one or more circuit paths 442 may be positioned entirely in the inner bore 448, for example, and not within the thickness. In some cases, one or more circuit paths 442 (or a portion thereof) may be positioned partially or entirely outside the tubular 440, such as at, on, or through the outer diameter 446.

In some cases, the universal control circuit 436 is implemented via four (4) circuit paths 442 as shown. However, any number of circuit paths 442 may make up the universal control circuit 436, such as 1, 2, 3, 4, 5, 6, 7, or 8 circuit paths 442. In some cases, up to 6 circuit paths 442 are included in the universal control circuit 436. FIGS. 4-2 and 4-3 show the circuit paths 442 as implemented via several tubulars 440-1, 440-2, and 440-n (collectively tubulars 440). The circuit paths 442 includes a first circuit path 442-1, a second circuit path 442-2 and an nth circuit path 442-n (collectively circuit paths 442). Additionally, the universal control circuit 436 is illustrated as corresponding with a universal control module 434, a first actuatable downhole module (first module) 432-1, a second actuatable downhole module (second module) 432-2, and an nth actuatable downhole module (nth module) 432-n (collectively modules 432). In this way, the universal control circuit 436 may be implemented via any number of iterations of the components shown and described, up to an nth iteration. A universal control module 434 is implemented via a tubular 440-c, which may include a portion of the circuit paths 442 therein.

Each of the circuit paths 442 may be configured to connect with an actuatable downhole module 432 as described herein. For example, each of the modules 432 includes actuation components 450. The actuation components 450 may be representative of any relevant or necessary componentry for actuating or operating a given module, such as valves, actuators, solenoids, and the like. For instance, the actuation components 450 may include hydraulic components and/or electronic components for causing an associated module to perform an actuation (or de-actuation) based on an actuation signal received by the actuation components 450 from the universal control module 434 via an associated circuit path 442. The universal control module 434 may include control components 452, which may be connected to the circuit paths 442 and which may selectively generate actuation signals and transmit the same via the circuit paths 442. For instance, the control components 452 may include any relevant or necessary pilot valves, shuttles, pressure chambers, solenoids, switches, or otherwise, for generating (e.g., hydraulic and/or electrical) actuation signals and selectively transmitting them through corresponding circuit paths 442 to an intended module. A given circuit path 442 may connect between adjacent tubulars 440 (e.g., where applicable) at mating flow ports or fittings, electrical contacts, or otherwise, for facilitating a continuity of the circuit paths 440 across multiple of the tubulars 440. In this way, the universal control module 434 may be connected independently to each of the modules 432, and may selectively communicate actuation signals to each of the modules 432 in an independent manner, for example, with the control components 452 and via the independent circuit paths 442 of the universal control circuit 436.

With reference in particular to FIG. 4-2, as shown, each the actuation components 450 for a given module 432 may represent an end or termination for an associated circuit path 442. For instance, the first circuit path 442-1 may connect the universal control module 434 to the actuation components 450 of the first module 432-1 based on the first circuit path 442 terminating or ending at the first module 432-1. For example, a flow path of the first circuit path 442-1 may be plumbed to terminate at the associated actuation components 450, or an electrical path may terminate thereat. Similarly, the second circuit path 442-2 may end or terminate at the actuation components 450 of the second module 432-1, and so on for any additional modules 432 and circuit paths 442 up to the nth module 432-n and nth circuit path 442-n.

While each module 432 may correspond with an associated circuit path 442 which may accordingly terminate therein, each tubular 440-1, however, may be equipped for connecting, transmitting, or relaying each of the (other) circuit paths 442 therethrough. For example, each of the tubulars 440 may include componentry (e.g., flow paths and/or conductors) for facilitating each of the circuit paths 442 traversing therethrough, and only an associated circuit path 442 may terminate therein, while the remaining circuit paths 442 may be connected or relayed to an adjacent, next, or downhole tubular 440. As an illustrative example, the first tubular 440-1 may include a flow path, conduit, conductor, etc. for each of the circuit paths 442-1, 442-2, up to 442-n, such that actuation signals may be transmitted along each of these circuit paths 442 through the first tubular 440-1. While the first circuit path 442-1 may terminate at the actuation components 450 of the first module 432-1, the remaining circuit paths 442-2 to 442-n may connect to corresponding flow paths, conduits, conductors, etc., of the second tubular 440-2.

Continuing with this illustrative example, at the second module 432-2, the second circuit path 442-2 may terminate at the associated actuation components 450, and any additional circuit paths up to the nth circuit path 442-n may continue therethrough to connect to associated components in this manner up to the nth tubular 440-n. Notably, however, while actuation signals may not be transmitted via the first circuit path 442-1 past that of the first module 432-1, the second tubular 440-2 nevertheless may include corresponding componentry (e.g., a flow path or a conductor) for facilitating a connection and/or relaying of the actuation signals via the first circuit path 442-1. In a similar way, the nth tubular 440-n may include corresponding componentry for connecting and/or relaying the first circuit path 442-1 and the second circuit path 442-2 (e.g., an others up to an n-1 circuit path) despite each of these circuit paths terminating prior to reaching the nth module 432-n.

In this way, each of the tubulars 440 may be equipped for facilitating a connection of each of the circuit paths 442 therethrough (e.g., whether or not a given circuit path does connect therethrough for a given implementation). As an illustrative example, each of the tubulars 440-1 through 440-n may be configured with components for forming each of the circuit paths 442-1 to 442-n as shown in FIG. 4-1 at their associated positions. Accordingly, an actuation signal sent via any of the circuit paths 442 may be transmitted via the control components 452 such that the actuation signal may travel through a given tubular 440, or else arrive and terminate therein at the actuation components 450 of the associated module 432. In this way, any module 432 may receive an actuation signal from the universal control module 434.

The tubulars 440 being equipped with each of the circuit paths 442 in this way may facilitate the modules 432 being arranged in any way, or with any relative positioning thereof. For example, as shown in FIG. 4-3, the same modules 432-1, 432-2 and 432-n are configured in a universal control circuit 436-2 (e.g., an alternate configuration of the universal control circuit 436), albeit in a different relative order than that of FIG. 4-2. Nevertheless, as shown, each of the circuit paths 442 connects to a same associated module 432 (and associated actuation components 450) as that of FIG. 4-2 despite being reordered from that of FIG. 4-2. For instance, the first module 432-1 is shown as positioned in a last or bottom position, and the first circuit path 442-1 nevertheless connects to the first modules 432-1, while in this case traversing each of the second tubular 440-2 and the nth tubular 440-n (and any tubulars therebetween). In a similar way the 2^{nd} module 432-2 and the nth module 432-n are connected via the same circuit paths 442 as in FIG. 4-2 while traversing a different combination of tubulars 440 than was the case in FIG. 4-2.

Additionally, a downhole evaluation system in this way may be readily configured with any combination of modules 432 based the universal nature of the universal control circuit 436. For example, while FIGS. 4-2 and 4-3 illustrate that any of the modules 432 may be rearranged in any way, additionally, any of the modules 432 may be swapped or exchanged for a different (e.g., type of) module. As an illustrative example, the first module 432-1 may be representative of a circulation valve which may be connectable and/or actuatable via the first circuit path 442-1. The circulation valve may be exchanged for another type of actuatable components, such as an isolation valve, sampling valve, or other, and may be readily connected and configured in the downhole evaluation system based on this exchanged component being configured in a similar way to that of the first module 432-1, that is being connectable and actuatable via the first circuit path 442-1 while facilitating the connection of each of the other circuit paths therethrough. In a similar way, the universal control circuit 436 may facilitate connecting additional modules 432 than that shown, up to the corresponding number of circuit paths 442 with which the universal control circuit 436 is equipped. Fewer modules 432-1 may also be implemented, including less than an available number of circuit paths.

Further, these benefits associated with combining any combination of modules 432 and in any order can be realized by utilizing the same universal control module 434. For example, the universal control modules 434 may be agnostic to the combination and/or order of the modules 432 with which it is implemented, but rather, may be configured to generate and transmit actuation signals via the circuit paths 442 to any module 432 to which it is connected.

In some cases, two modules 432 may not necessarily be connected adjacent or directly coupled, but rather, an axial spacing may be established therebetween in accordance with a given application. For example, the universal control circuit 436 may include one or more tubulars 440 which may be spacers, or which not be modules 432 with corresponding actuation components 450, but rather, may facilitate the transmission and/or relaying alone of all of the circuit paths 442 therethrough (e.g., without any circuit paths terminating therein). In this way, the downhole evaluation system 430 may be configured with modules 432 spaced at any desired axial locations.

Accordingly, the universal control circuit 436 may facilitate the downhole evaluation system 430 being modular and readily reconfigurable. As mentioned above, this may be advantageous and beneficial in that any combination of modules and arrangement thereof may be readily attainable and implemented. This may be especially valuable over conventional solutions, as reconfiguring the combination of modules and/or rearranging their positioning may be simply and readily achieved, for example, at a surface of the wellbore, shop, or elsewhere without requiring a complete redesign, re-engineering, and specific production of a custom, bespoke, and/or application-specific downhole evaluation system.

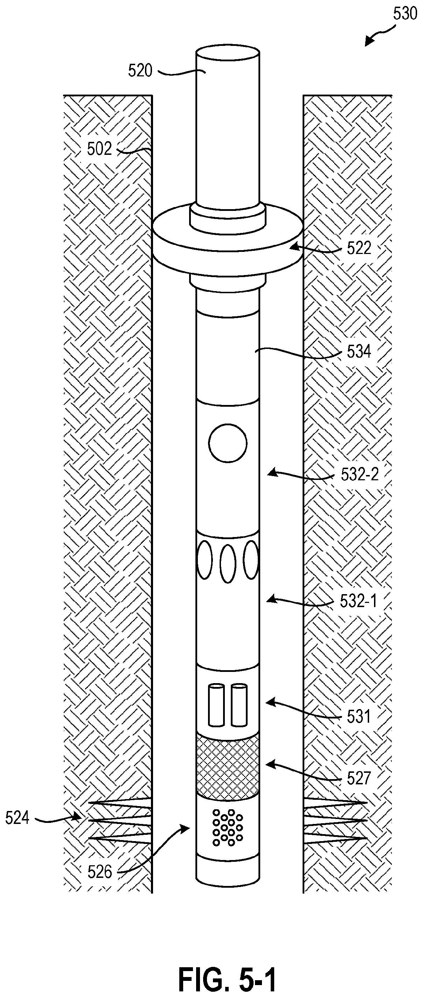

FIG. 5-1 illustrates an exemplary configuration of a downhole evaluation system 530, according to at least one embodiment of the present disclosure. The downhole evaluation system 530 may be a modular system and may be implemented via a universal control module 534 connected to a circulation valve module 532-1 and an isolation valve module 532-2. The universal control module 534 may be connected to the circulation valve module 532-1 and the isolation valve module 532-2 by a universal control circuit (not shown) as described herein. In some cases, the downhole evaluation system 530 may be a formation testing system for performing formation testing operations.

As shown, the universal control module 534, the isolation valve module 532-2, and the circulation valve module 532-1 may be positioned beneath or downhole from a packer 522. As described herein, the universal control module 534 may receive control signals (e.g., from surface) transmitted as acoustic signals and in this way may be controlled notwithstanding the packer 522 sealing a flow of fluid from within a wellbore 502.

The downhole evaluation system 530 may be implemented to receive a flow of a formation fluid from a production zone 524 or reservoir. For example, the downhole evaluation system 530 may include a fluid inlet 526. The isolation valve module 532-2 may be operated to cut off, shut in, and/or meter the flow of the formation fluid to facilitate taking measurements with downhole instrumentation 531. In some cases, the downhole evaluation system 530 includes a screen 527, which may filter or remove solid particles such as sand from the formation fluid prior to the formation fluid flowing upward through the downhole evaluation system 530 and through a production tubing 520. In some cases, the screen 527 may become clogged, filled, or otherwise blocked. In such cases, the formation fluid may not be permitted to flow through the screen 527 which may negatively affect the ability of the downhole evaluation system 530 to perform one or more formation testing operations. For instance, in the case of long-term monitoring (LTM), the downhole evaluation system 530 may be subjected to a continual and/or extended flow and/or pressure of the formation fluid, which may tend to clog the screen 527. The downhole evaluation system 530, however, being adapted and configured as shown may facilitate bypassing the fluid inlet 526 and screen 527, for example, with the circulation valve module 532-1. For instance, the circulation valve module 532-1 may be actuated to permit the formation fluid to flow into the production tubing 520. Additionally, because the isolation valve module 532-2 is positioned uphole of the circulation valve module 532-1, the isolation valve module 532-2 can still be operated as the main shut-in valve for formation testing, enabling the downhole instrumentation to continue collecting data for the formation testing operation.

The isolation valve module 532-2 being positioned uphole of the circulation valve module 532-1 may also help to prevent the isolation valve module 532-2 from becoming stuck or damaged during circulation of fluids via the circulation valve module 532-1. For example, in some conventional downhole evaluation systems, a circulation valve may be positioned uphole of an isolation valve, and as fluid is circulated (e.g., up) through the production tubing 520, solid particles or debris may tend to settle or flow downward and collect at or above the isolation valve which may tend to obstruct, block, clog, or damage the isolation valve. Thus, but positioning the isolation valve module 532-2 uphole of the circulation valve module 532-1, this situation may be avoided. Accordingly, the advantageous configuration of the downhole evaluation system 530 may be readily implemented based on the modular and/or re-configurable nature of the various modules as described herein.

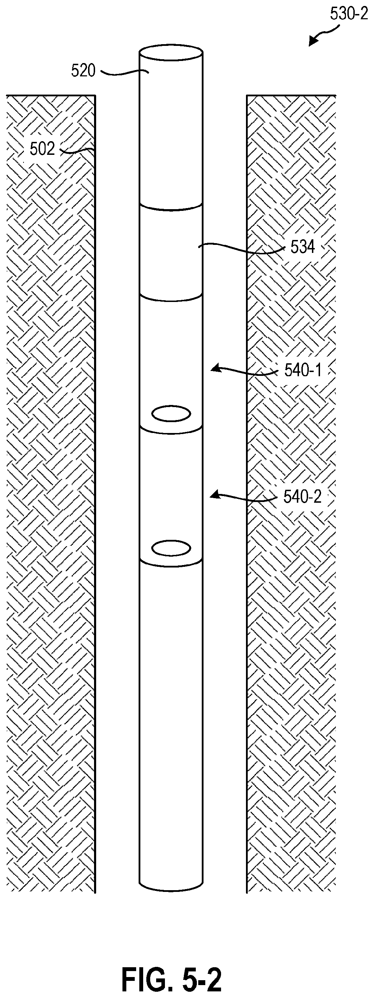

FIG. 5-2 illustrates an exemplary configuration of a downhole evaluation system 530-2, according to at least one embodiment of the present disclosure. The downhole evaluation system 530-2 may include the universal control module 534 for operating various downhole actuatable modules. For instance, in some cases, the downhole evaluation system 530-2 includes a first module 540-1 and a second module 540-2. In some cases, the first module 540-1 and second module 540-2 are the same type of module, such as repeated, redundant, or multiple iterations of a same type of module. For example, in some cases, the first module 540-1 and second module 540-2 are each ball valve modules. The first module 540-1 and second module 540-2 may be any type of module. For example, in some cases they are both circulations valves, isolation valves, or tester valves. In some cases, they are both spool valves, reversing valves, check valves, flapper valves, gate valves, or sampling valves. In some cases, the first module 540-1 and second module 540-2 are different modules and/or are not the same type of valve. In this way the downhole evaluation system 530-2 may be otherwise configured.

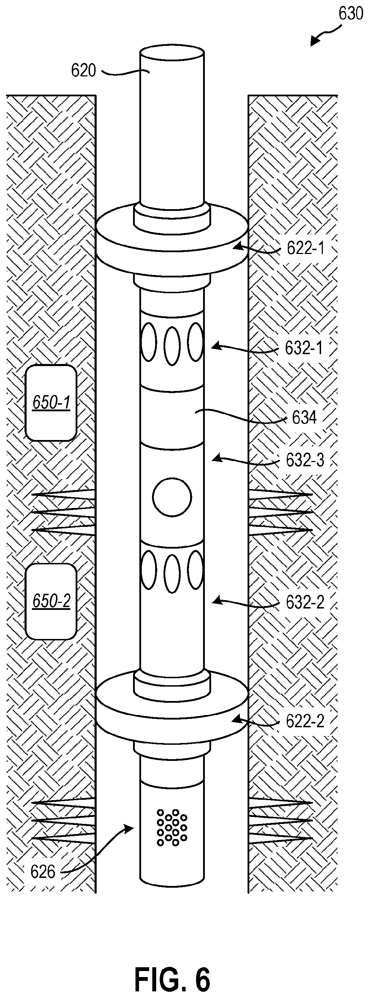

FIG. 6 illustrates another exemplary configuration of a downhole evaluation system 630, according to at least one embodiment of the present disclosure. The downhole evaluation system 630 may be in accordance with any of the downhole evaluation systems described herein. For example, the downhole evaluation system 630 may be a modular system and may be implemented via a universal control module 634 connected to a first circulation valve module 632-1, a second circulation valve module 632-2, and an isolation valve module 632-3. The universal control module 634 may be connected to these various modules by a universal control circuit (not shown) as described herein. In some cases, the downhole evaluation system 630 may be formation testing system for performing formation testing operations.

In some cases, the downhole evaluation system 630 is implemented as a formation testing system in connection with performing formation testing operations for multiple production zones, such as a first production zone 650-1 and a second production zone 650-2. A first packer 622-1 may be positioned and set above both production zones, and a second packer 622-2 may be positioned and set between the production zones. In this way, the first production zone 650-1 and the second production zone 650-2 may be isolated from one another. The first circulation valve module 632-1, second circulation valve module 632-2, and isolation valve module 632-3 may be positioned between the first packer 622-1 and second packet 622-2. The universal control module 634 may also be positioned between the packers, or may be otherwise located.

The configuration of modules and their relative arrangement in the downhole evaluation system 630 may facilitate testing each production zone independently. For example, in order to test the second production zone 650-1, the first circulation valve module 632-1 and second circulation valve module 632-2 can be closed in order to prevent mixing between the two production zones. The downhole evaluation system 630 may be in fluid communication with the second production zone 650-1 via an inlet 626 positioned downhole of the second packer 622-2, and the isolation valve module 632-3 can be closed to serve as the main shut-in valve for formation testing. Accordingly, associated downhole instrumentation of the downhole evaluation system 630 can take pressure measurements, flow measurements, and others in order to evaluation the second production zone 650-2.

The downhole evaluation system 630 may also facilitate evaluating the first production zone 650-1. For example, the second circulation valve module 632-2 and the isolation valve module 632-3 may each be closed to cut off fluid communication from the second production zone 650-2 as well as to prevent mixing of fluid from the first production zone 650-1 to the second production zone 650-2. By opening the first circulation valve module 632-1, fluid from the first production zone 650-1 may flow into the production tubing 620, and another (e.g., uphole) valve of the tool string may be closed to serve at the shut-in valve. In this way, the first production zone 650-1 and the second production zone 650-2 may each be tested individually while sealing the other production zone.

In some cases, when the first production zone 650-1 is being tested, the isolation valve module 632-3 may tend to become plugged and/or unusable, such as from debris, sand, solids, etc., settling out of the flow of production fluid upward through the production tubing 620 via the first circulation valve module 632-1 (e.g., based on the isolation valve module 632-3 being closed). However, both the first production zone 650-1 and the second production zone 650-2 may be testing together even though the isolation valve module 632-3 may likely have become clogged or stuck during testing of the first production zone 650-1. For example, the isolation valve module 632-3 may be closed, and the first circulation valve module 632-1 and second circulation valve module 632-2 may each be opened, which may allow fluid from the second production zone 650-2 to flow into the inlet 626 and out of the second circulation valve module 632-2 where it may mix with fluid from the first production zone 650-1. This mixed fluid may flow into the production tubing 620 at the first circulation valve module 632-1, and an uphole valve may serve as a main shut-in valve for testing, or else the mixed fluid may be produced elsewhere up the production tubing 620. In this way, the isolation valve module 632-3 may be bypassed to facilitate testing and/or producing from the production zones, for example, notwithstanding the isolation valve module 632-3 becoming stuck or inoperable.

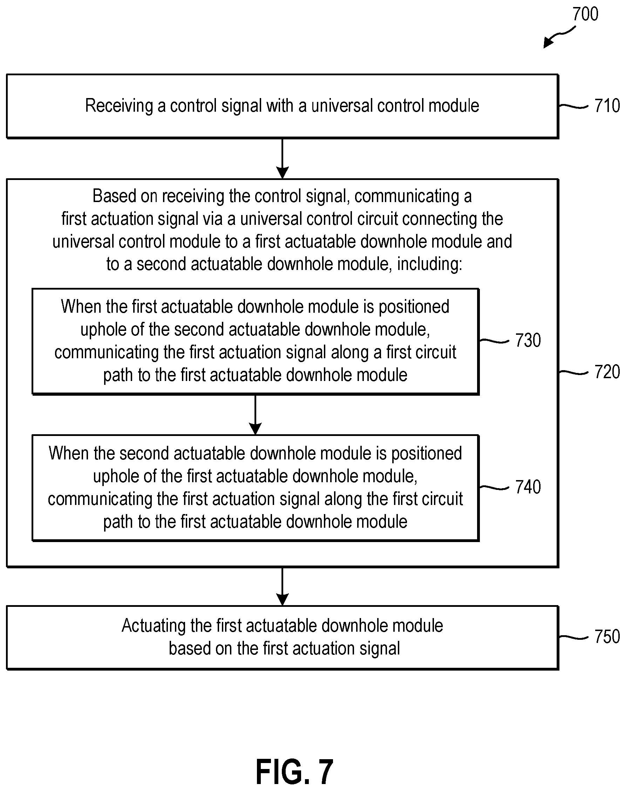

FIG. 7 illustrates a flow diagram for a method 700 or a series of acts for operating a downhole evaluation system as described herein, according to at least one embodiment of the present disclosure. While FIG. 7 illustrates acts according to one embodiment, alternative embodiments may add to, omit, reorder, or modify any of the acts of FIG. 7.

In some embodiments, the method 700 includes an act 710 of receiving a control signal with a universal control module.

In some embodiments, the method 700 includes an act 720 of, based on receiving the control signal, communicating a first actuation signal via a universal control circuit connecting the universal control module to a first actuatable downhole module and to a second actuatable downhole module. In some embodiments, the act 720 may include one or more sub acts. For example, in some embodiments, communicating the first actuation signal includes an act 730 of, when the first actuatable downhole module is positioned uphole of the second actuatable downhole module, communicating the first actuation signal along a first circuit path to the first actuatable downhole module. Additionally, communicating the first actuation signal may also include an act 740 of, when the second actuatable downhole module is positioned uphole of the first actuatable downhole module, communicating the first actuation signal along the first circuit path to the first actuatable downhole module.

In some embodiments, the method 700 includes an act 750 of actuating the first actuatable downhole module based on the first actuation signal.

In some embodiments, the method 700 further includes, based on the control signal, communicating a second actuation signal via the universal control circuit. In some embodiments, communicating the second actuation signal includes, when the first actuatable downhole module is positioned uphole of the second actuatable downhole module, communicating the second actuation signal along a second circuit path to the second actuatable downhole module. Additionally, communicating the second actuation signal may also include, when the second actuatable downhole module is positioned uphole of the first actuatable downhole module, communicating the second actuation signal along the second circuit path to the second actuatable downhole module. Further, the method 700 may include actuating the second actuatable downhole module based on the second actuation signal.

In some embodiments, the universal control circuit is a hydraulic circuit, and communicating the first actuation signal includes flowing a control fluid to the first actuatable downhole module via the first circuit path to actuate the first actuatable downhole module with the control fluid.

In some embodiments, the method 700 further includes performing a formation testing operation based on actuating the first actuatable downhole module.

### INDUSTRIAL APPLICABILITY

The following description from ¶¶ [0087]-[0107] includes various embodiments that, where feasible, may be combined in any permutation. For example, the embodiment of ¶ [0087] may be combined with any or all embodiments of the following paragraphs. Embodiments that describe acts of a method may be combined with embodiments that describe, for example, systems and/or devices. Any permutation of the following paragraphs is considered to be hereby disclosed for the purposes of providing "unambiguously derivable support" for any claim amendment based on the following paragraphs. Furthermore, the following paragraphs provide support such that any combination of the following paragraphs would not create an "intermediate generalization."

In some embodiments, a downhole evaluation system includes a first actuatable downhole module, a second actuatable downhole module, a universal control circuit including a first circuit path and a second circuit path, wherein the first circuit path connects to the first actuatable downhole module and the second circuit path connects to the second actuatable downhole module irrespective of a relative positioning of the first actuatable downhole module and the second actuatable downhole module, and a universal control module connected to the universal control circuit for selectively controlling an actuation of the first actuatable downhole module and the second actuatable downhole module.

In some embodiments, the first circuit path connects the universal control module to the first actuatable downhole module and the second circuit path connects the universal control module to the second actuatable downhole module when the first actuatable downhole module is positioned uphole of the second actuatable downhole module and when the second actuatable downhole module is positioned uphole of the first actuatable downhole module such that the universal control module can selectively actuate the first actuatable downhole module and the second actuatable downhole module irrespective of the relative positioning therebetween.

In some embodiments, one or more of the first actuatable downhole module and the second actuatable downhole module are downhole flow control devices.

In some embodiments, the first actuatable downhole module is a circulation valve and the second actuatable downhole module is an isolation valve.

In some embodiments, the universal control circuit is a hydraulic circuit, and wherein the first circuit path and the second circuit path are hydraulic circuit paths.

In some embodiments, the universal control circuit is an electrical circuit, and wherein the first circuit path and the second circuit path are hydraulic circuit paths.

In some embodiments, the second circuit path is connected to the second actuatable downhole module through the first actuatable downhole module.

In some embodiments, the first actuatable downhole module and the second actuatable downhole module are each components selected from the group consisting of: a spool valve, a reversing valve, a check valve, a flapper valve, a ball valve, a gate valve, and a sampling valve.

In some embodiments, a formation testing system includes a tubular positioned within a wellbore, a packer connected to the tubular to fix a position of the tubular within the wellbore, and a downhole evaluation system connected to the tubular, including a plurality of actuatable downhole modules, a universal control circuit connected to each of the plurality of actuatable downhole modules independently and irrespective of a relative positioning therebetween, and a universal control module connected the plurality of actuatable downhole modules via the universal control circuit for selectively controlling an actuation of each of the plurality of actuatable downhole modules.

In some embodiments, the universal control module includes an acoustic receiver for receiving acoustic control signals.

In some embodiments, the acoustic receiver is configured to receive the acoustic control signals transmitted from a surface of the wellbore.

In some embodiments, the universal control module is positioned downhole of the packer.

In some embodiments, the plurality of actuatable downhole modules includes at least one circulation valve and at least one isolation valve.

In some embodiments, the plurality of actuatable downhole modules are positioned downhole of the packer.

In some embodiments, the packer is a first packer and the formation evaluation system further includes a second packer connected to the tubular, wherein the plurality of actuatable downhole modules are positioned between the first packer and the second packer.

In some embodiments, the plurality of actuatable downhole modules includes a first circulation valve, a second circulation valve, and an isolation valve.

In some embodiments, a method of operating a downhole evaluation system includes receiving a control signal with a universal control module, based on the control signal, communicating a first actuation signal via a universal control circuit connecting the universal control module to a first actuatable downhole module and to a second actuatable downhole module, communicating the first actuation signal including, when the first actuatable downhole module is positioned uphole of the second actuatable downhole module, communicating the first actuation signal along a first circuit path to the first actuatable downhole module, when the second actuatable downhole module is positioned uphole of the first actuatable downhole module, communicating the first actuation signal along the first circuit path to the first actuatable downhole module, and actuating the first actuatable downhole module based on the first actuation signal.

In some embodiments, the method further includes, based on the control signal, communicating a second actuation signal via the universal control circuit, including, when the first actuatable downhole module is positioned uphole of the second actuatable downhole module, communicating the second actuation signal along a second circuit path to the second actuatable downhole module, and when the second actuatable downhole module is positioned uphole of the first actuatable downhole module, communicating the second actuation signal along the second circuit path to the second actuatable downhole module, and actuating the second actuatable downhole module based on the second actuation signal.

In some embodiments, the universal control circuit is a hydraulic circuit, and communicating the first actuation signal includes flowing a control fluid to the first actuatable downhole module via the first circuit path to actuate the first actuatable downhole module with the control fluid.

In some embodiments, the method further includes performing a formation testing operation based on actuating the first actuatable downhole module.

The embodiments of the downhole evaluation systems herein have been primarily described with reference to wellbore drilling operations; the downhole evaluation systems described herein may be used in applications other than the drilling of a wellbore. In other embodiments, the downhole evaluation systems according to the present disclosure may be used outside a wellbore or other downhole environment used for the exploration or production of natural resources. For instance, the downhole evaluation systems of the present disclosure may be used in a borehole used for placement of utility lines. Accordingly, the terms "wellbore," "borehole" and the like should not be interpreted to limit tools, systems, assemblies, or methods of the present disclosure to any particular industry, field, or environment.

One or more specific embodiments of the present disclosure are described herein. These described embodiments are examples of the presently disclosed techniques. Additionally, in an effort to provide a concise description of these embodiments, not all features of an actual embodiment may be described in the specification. It should be appreciated that in the development of any such actual implementation, as in any engineering or design project, numerous embodiment-specific decisions will be made to achieve the developers' specific goals, such as compliance with system-related and business-related constraints, which may vary from one eambodiment to another. Moreover, it should be appreciated that such a development effort might be complex and time consuming, but would nevertheless be a routine undertaking of design, fabrication, and manufacture for those of ordinary skill having the benefit of this disclosure.

Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the spirit and scope of the present disclosure, and that various changes, substitutions, and alterations may be made to embodiments disclosed herein without departing from the spirit and scope of the present disclosure. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the embodiments that falls within the meaning and scope of the claims is to be embraced by the claims.

The terms "approximately," "about," and "substantially" as used herein represent an amount close to the stated amount that is within standard manufacturing or process tolerances, or which still performs a desired function or achieves a desired result. For example, the terms "approximately," "about," and "substantially" may refer to an amount that is within less than 5% of, within less than 1% of, within less than 0.1% of, and within less than 0.01% of a stated amount. Further, it should be understood that any directions or reference frames in the preceding description are merely relative directions or movements. For example, any references to "up" and "down" or "above" or "below" are merely descriptive of the relative position or movement of the related elements. Additionally, as used herein, the term "and/or" includes any and all combinations of one or more of the associated listed items.

The present disclosure may be embodied in other specific forms without departing from its spirit or characteristics. The described embodiments are to be considered as illustrative and not restrictive. The scope of the disclosure is, therefore, indicated by the appended claims rather than by the foregoing description. Changes that come within the meaning and range of equivalency of the claims are to be embraced within their scope.

## Claims

1. A downhole evaluation system, comprising:
a first actuatable downhole module;
a second actuatable downhole module;
a universal control circuit including a first circuit path and a second circuit path, wherein the first circuit path connects to the first actuatable downhole module and the second circuit path connects to the second actuatable downhole module irrespective of a relative positioning of the first actuatable downhole module and the second actuatable downhole module; and
a universal control module connected to the universal control circuit for selectively controlling an actuation of the first actuatable downhole module and the second actuatable downhole module.

2. The downhole evaluation system of claim 1, wherein the first circuit path connects the universal control module to the first actuatable downhole module and the second circuit path connects the universal control module to the second actuatable downhole module when the first actuatable downhole module is positioned uphole of the second actuatable downhole module and when the second actuatable downhole module is positioned uphole of the first actuatable downhole module such that the universal control module can selectively actuate the first actuatable downhole module and the second actuatable downhole module irrespective of the relative positioning therebetween.

3. The downhole evaluation system of claim 1 or 2, wherein one or more of the first actuatable downhole module and the second actuatable downhole module are downhole flow control devices.

4. The downhole evaluation system of any one of the preceding claims, wherein the first actuatable downhole module is a circulation valve and the second actuatable downhole module is an isolation valve.

5. The downhole evaluation system of any one of the preceding claims, wherein the universal control circuit is a hydraulic circuit, and wherein the first circuit path and the second circuit path are hydraulic circuit paths and/or wherein the universal control circuit is an electrical circuit, and wherein the first circuit path and the second circuit path are hydraulic circuit paths.

6. The downhole evaluation system of any one of the preceding claims, wherein the second circuit path is connected to the second actuatable downhole module through the first actuatable downhole module.

7. The downhole evaluation system of any one of the preceding claims, wherein the first actuatable downhole module and the second actuatable downhole module are each components selected from the group consisting of: a spool valve, a reversing valve, a check valve, a flapper valve, a ball valve, a gate valve, and a sampling valve.

8. A formation testing system, comprising:
a tubular positioned within a wellbore;
a packer connected to the tubular to fix a position of the tubular within the wellbore; and
a downhole evaluation system connected to the tubular, comprising:
a plurality of actuatable downhole modules;
a universal control circuit connected to each of the plurality of actuatable downhole modules independently and irrespective of a relative positioning therebetween; and
a universal control module connected the plurality of actuatable downhole modules via the universal control circuit for selectively controlling an actuation of each of the plurality of actuatable downhole modules.

9. The formation testing system of claim 8, wherein the universal control module includes an acoustic receiver for receiving acoustic control signals, wherein the acoustic receiver is preferably configured to receive the acoustic control signals transmitted from a surface of the wellbore, and/or wherein the universal control module is positioned downhole of the packer.

10. The formation testing system of claim 8 or 9, wherein the plurality of actuatable downhole modules includes at least one circulation valve and at least one isolation valve and/or wherein the plurality of actuatable downhole modules are positioned downhole of the packer.

11. The formation testing system of any one of the claims 8 - 10, wherein the packer is a first packer and the formation evaluation system further includes a second packer connected to the tubular, wherein the plurality of actuatable downhole modules are positioned between the first packer and the second packer.

12. The formation testing system of claim 11, wherein the plurality of actuatable downhole modules includes a first circulation valve, a second circulation valve, and an isolation valve.

13. A method of operating a downhole evaluation system, comprising:
receiving a control signal with a universal control module;
based on the control signal, communicating a first actuation signal via a universal control circuit connecting the universal control module to a first actuatable downhole module and to a second actuatable downhole module, communicating the first actuation signal including:
when the first actuatable downhole module is positioned uphole of the second actuatable downhole module, communicating the first actuation signal along a first circuit path to the first actuatable downhole module; and
when the second actuatable downhole module is positioned uphole of the first actuatable downhole module, communicating the first actuation signal along the first circuit path to the first actuatable downhole module; and
actuating the first actuatable downhole module based on the first actuation signal, preferably further comprising performing a formation testing operation based on actuating the first actuatable downhole module.

14. The method of claim 13, further comprising:
based on the control signal, communicating a second actuation signal via the universal control circuit, including:
when the first actuatable downhole module is positioned uphole of the second actuatable downhole module, communicating the second actuation signal along a second circuit path to the second actuatable downhole module; and
when the second actuatable downhole module is positioned uphole of the first actuatable downhole module, communicating the second actuation signal along the second circuit path to the second actuatable downhole module; and
actuating the second actuatable downhole module based on the second actuation signal.

15. The method of claim 13 or 14, wherein the universal control circuit is a hydraulic circuit, and communicating the first actuation signal includes flowing a control fluid to the first actuatable downhole module via the first circuit path to actuate the first actuatable downhole module with the control fluid.
